# EUROPÄISCHE PATENTSCHRIFT

(11) **EP 1 397 729 B1**
(45) Veröffentlichungstag und Bekanntmachung des Hinweises auf die Patenterteilung: **22.03.2006**
(21) Anmeldenummer: 02747186.1
(22) Anmeldetag: 31.05.2002
(51) Int. Cl.: G05B 19/048, F02D 41/26, G05B 9/02, G05B 23/02

(54) **VORRICHTUNG ZUR SICHEREN SIGNALERZEUGUNG**
DEVICE FOR RELIABLE SIGNAL GENERATION
DISPOSITIF DE PRODUCTION SECURISEE DE SIGNAL

(30) Priorität: 02.06.2001 DE 10127056
(43) Veröffentlichungstag der Anmeldung: 17.03.2004
(73) Patentinhaber: ROBERT BOSCH GMBH, 70442 Stuttgart (DE)
(72) Erfinder: DALAKURAS, Lambros, 75217 Birkenfeld (DE); SCHUMPELT, Michael, 71739 Oberriexingen (DE); HIRT, Juergen, 71292 Friolzheim (DE)
(86) Internationale Anmeldenummer: PCT/DE2002/001987
(87) Internationale Veröffentlichungsnummer: WO 2002/099547

(56) Entgegenhaltungen:
- DE-A- 4 118 558
- DE-A- 19 731 972
- US-A- 4 910 494

## Beschreibung

### Stand der Technik

Die Erfindung geht aus von einer Vorrichtung zur sicheren Signalerzeugung nach der Gattung des unabhängigen Anspruchs. Aus der nachveröffentlichten DE-A 100 11 410 ist bereits eine Vorrichtung zur sicheren Signalerzeugung bekannt, bei der eicherheitskritische Signale einerseits über einen Mikrocontroller, andererseits bei einem Fehlerfall des Mikrocontrollers über einen Notlaufpfad unabhängig vom Mikrocontroller erzeugt werden können. Dadurch erhöht sich die Sicherheit bei der Erzeugung eines sicherheitsrelevanten Signals. Eine gezielte Funktionsüberprüfung der beteiligten Komponenten ist jedoch nicht vorgesehen.

Die DE-A 41 18 558 beschreibt ein System zur Steuerung einer Brennkraftmaschine, wobei Mittel zur Abgabe eines Drehzahlsignals sowie Mittel zur Abgabe eines Fahrerwunschsignals vorhanden sind. Eine Steuereinrichtung gibt ein Stellsignal, das wenigstens von dem Fahrerwunschsignal abhängt, an ein leistungsbestimmendes Stellwerk ab. Des weiteren sind Mittel zur Sicherstellung eines Notlaufbetriebs vorgesehen, wobei eine Überwachungseinrichtung ständig die Funktionsfähigkeit der Steuereinrichtung sowie der übrigen Komponenten des Systems überwacht und im Falle eines Defekts mittels eines Schalters die Steuereinrichtung von dem Stellwerk trennt sowie eine Notsteuereinrichtung mit dem Stellwerk verbindet.

Die DE-A 197 31 972 offenbart ein Verfahren zum Steuern einer Brennkraftmaschine mit einer Steuereinrichtung, die eine erste Recheneinheit und eine zweite Recheneinheit, in denen ein Steuerprogramm mit einer ersten, zweiten und dritten Programmebene abgearbeitet wird, umfasst. In der zweiten Programmebene wird ein Stellsignal überwacht und eine erste Notlauffunktion in der ersten Programmebene aktiviert, wenn die zweite Programmebene eine Unplausibilität des Stellsignals erkannt hat. Darüber hinaus wird die dritte Programmebene veranlasst, eine zweite Notlauffunktion auszuführen, wenn unter der Annahme, dass die erste Notlauffunktion in der ersten Programmebene ausgeführt wird, weiterhin die Unplausibilität des Stellsignals erkannt wird. In der ersten Notlauffunktion findet bevorzugt eine Drehzahlbegrenzung der Brennkraftmaschine statt, während die zweite Notlauffunktion bevorzugt ein Stillsetzen der Brennkraftmaschine vorsieht.

Aus der US-A 4 910 494 ist ein System zur Ansteuerung von Verbrauchern in einem Kraftfahrzeug bekannt, wobei das System eine elektronische Steuereinrichtung zur Ansteuerung der Verbraucher im fehlerfreien Betrieb sowie eine Notlaufeinrichtung zur Ansteuerung der Verbraucher in einem Notlaufbetrieb umfasst. Sowohl die Steuereinrichtung als auch die Notlaufeinrichtung übertragen Diagnosesignale, empfangen die Diagnosesignale voneinander und untersuchen sie auf Abweichungen, wobei ein Fehler in der Steuereinrichtung durch die Notlaufeinrichtung und ein Fehler in der Notlaufeinrichtung durch die Steuereinrichtung erkennbar ist.

Es ist Aufgabe der vorliegenden Erfindung, die Sicherheit bei der Signalerzeugung weiter zu erhöhen. Diese Aufgabe wird gelöst durch die Merkmale des unabhängigen Anspruchs.

### Vorteile der Erfindung

Die erfindungsgemäße Vorrichtung zur sicheren Signalerzeugung in einem Kraftfahrzeug umfasst zumindest ein steuermittel, dem zumindest ein Steuersignal zugeführt ist. Das Steuermittel erzeugt in Abhängigkeit von dem Steuersignal ein Ansteuersignal zur Ansteuerung eines Schaltmittels oder Treibers. Es sind Notlaufmittel vorgesehen, die in einem Notbetrieb das Ansteuersignal unter Umgehung des Steuermittels in Abhängigkeit von zumindest dem einen Steuersignal erzeugen. Weiterhin sind überprüfungsmittel vorgesehen, die anhand einer gezielten Ansteuerung der Notlaufmittel deren Funktionsfähigkeit überprüfen, wobei erfindungsgemäß erst nach einer definierten Zeitspanne ab Flankenwechsel des Steuersignals eine Aktivierung oder Deaktivierung des Notlaufmittels für eine vorgebbare Zeitspanne erfolgt. Mit der erfindungsgemäßen Vorrichtung ist es möglich, die Funktionsfähigkeit der beteiligten Komponenten einer sicheren Signalerzeugung ständig zu kontrollieren. Fehlerhafte Betriebszustände der Notlaufmittel werden sicher erkannt und können dem Benutzer angezeigt werden, um beispielsweise eine Werkstatt aufzusuchen und den Fehler zu beheben. Da die Notlaufmittel zudem erst nach einer definierten Zeitspanne ab einem Flankenwechsel des Steuersignals aktiviert werden, kommt es für den Benutzer zu nicht spürbaren Testroutinen, die standardmäßig mit jedem Auftreten bzw. Flankenwechsel des Steuersignals durchgeführt werden. Selbst bei fehlerhaften Notlaufmitteln wird der Benutzer mögliche Verzögerungen bei der Aktivierung oder Deaktivierung der gewünschten Funktion nicht bemerken, da die vorgebbare Zeitspanne entsprechend kurz gewählt werden kann. Diese kurze Zeitspanne ist in der Regel ausreichend, um anhand eingehender Rückmeldesignale einen Fehler des Notlaufmittels zu detektieren. Das innerhalb dieser Zeitspanne auftretende Rückmeldesignal wird mit dem Sollzustand verglichen, der mit dem Steuersignal korrespondiert. Bei Abweichungen wird auf einen Fehler geschlossen.

In einer zweckmäßigen Weiterbildung sind als Steuersignale beispielsweise die Signale "Zündung", "Start", "Abblendlicht", "Standlicht" vorgesehen. Gerade die genannten Kraftfahrzeugfunktionen sind von großer Sicherheitsrelevanz für eine betriebssichere Kraftfahrzeugbenutzung.

Weitere zweckmäßige Weiterbildungen ergeben sich aus weiteren abhängigen Ansprüchen und aus der Beschreibung.

### Zeichnung

Die Ausführungsbeispiele der Erfindung sind in der Zeichnung dargestellt und werden im Folgenden näher beschrieben.

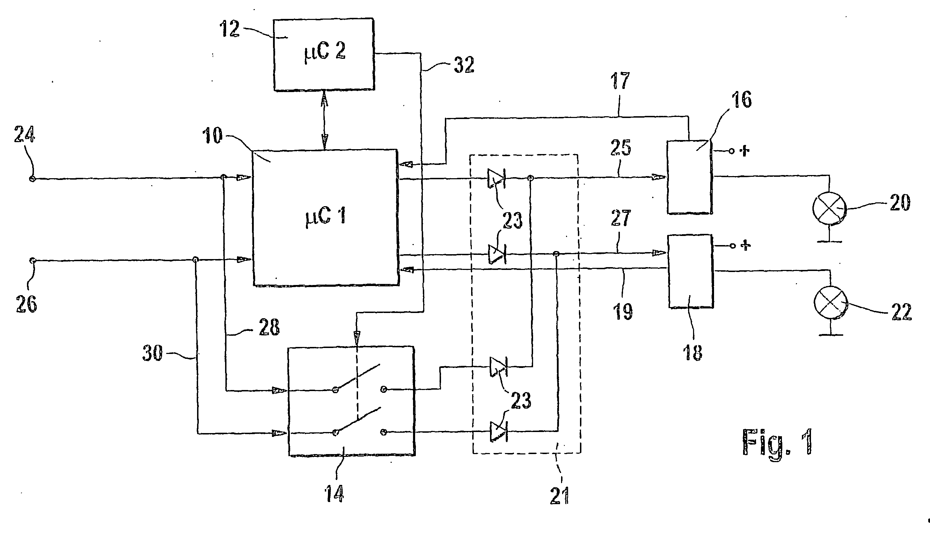

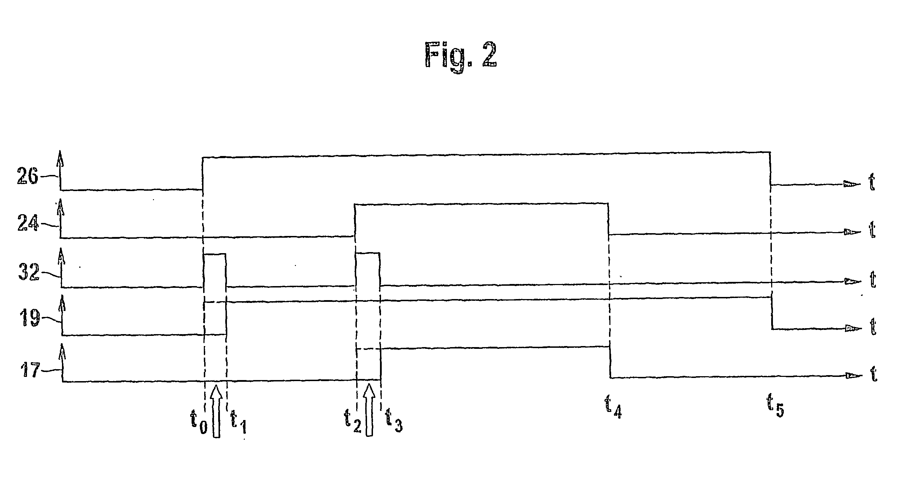

Es zeigen die Figuren 1, 3 und 5 Blockschaltbilder dreier Ausführungsbeispiele sowie die Figuren 2, 4 und 6 die zugehörigen Signalverläufe.

### Beschreibung der Ausführungsbeispiele

Ein Abblendlicht-Steuersignal 24 und ein Standlicht-Steuersignal 26 sind einem ersten Mikrocontroller 10 zugeführt. Das Abblendlichtsteuersignal 24 gelangt über einen ersten Notlaufpfad 28, das Standlicht-Steuersignal 26 über einen zweiten Notlaufpfad 30 an ein Schaltmittel 14. Das Schaltmittel 14 leitet im geschlossenen Zustand über die Dioden 23 das Abblendlicht-Steuersignal 24 bzw. das Standlicht-Steuersignal 26 als Abblendlicht-Ausgangssignal 25 bzw. Standlicht-Ausgangssignal 27 an einen ersten Treiber 16 bzw. an einen zweiten Treiber 18 zu deren Ansteuerung weiter. Der erste Mikrocontroller 10 kommuniziert mit einem zweiten Mikrocontroller 12, der ein Notlaufaktivierungssignal 32 bereitstellt zur Ansteuerung des Schaltmittels 14. Der erste Mikrocontroller 10 erzeugt in Abhängigkeit von dem Abblendlicht-Steuersignal 24 ein Abblendlicht-Ausgangssignal 25, welches über die Dioden 23 mit dem zugehörigen Ausgangssignal des Schaltmittels 14 logisch Oder-verknüpft ist. In gleicher Weise erzeugt der erste Mikrocontroller 10 gegebenenfalls ein Standlicht-Ausgangssignal 27, ebenfalls verodert mit dem entsprechenden Ausgangssignal des Schaltmittels 14. Abblendlicht-Ausgangssignal 25 und Standlicht-Ausgangssignal 27 sind jeweils Ansteuersignale für den ersten Treiber 16 bzw. den zweiten Treiber 18, über die das Abblendlicht 20 bzw. ein Standlicht 22 mit elektrischer Energie versorgt wird. Die Treiber 16, 18 sensieren jeweils den am Ausgang fließenden Strom, mit dem der jeweilige Verbraucher 20, 22 beaufschlagt wird, und melden ihn als Rückmeldesignal 17 des ersten Treibers 16 bzw. Rückmeldesignal 19 des zweiten Treibers 18 an den ersten Mikrocontroller 10 zurück.

Figur 2 zeigt mögliche Signalverläufe, wie sie beim Ausführungsbeispiel gemäß Figur 1 auftreten können. Das Standlicht-Steuersignal 26 wechselt zum Zeitpunkt t₀ seinen Zustand von logisch Null auf logisch Eins. Dieses Ereignis triggert das Notlaufaktivierungssignal 32, welches zwischen den Zeitpunkten t₀ und t₁ den Zustand logisch Eins annimmt. Liegt ein Fehler des zweiten Notlaufpfades 30 vor, so ändert das den Zustand des Standlichts 22 anzeigende Rückmeldesignal 19 erst zum Zeitpunkt t₁ seinen logischen Zustand von Null auf Eins. Ist der zweite Notlaufpfad 30 jedoch funktionsfähig, wird das Standlicht 22 bereits zum Zeitpunkt t₀ aktiviert, was anhand des Rückmeldesignals 19 des zweiten Treibers 18 erkennbar ist (gestrichelt dargestellt). Zum Zeitpunkt t₂ aktiviert der Benutzer das Abblendlicht, was sich in einem Signalwechsel des Abblendlicht-Steuersignals 24 von logisch Null auf logisch Eins bemerkbar macht. Dieses Ereignis ruft zum Zeitpunkt t₂ ein Notlaufaktivierungssignal 32 von logisch Eins hervor, welches für eine vordefinierte Zeitspanne bis zum Zeitpunkt t₃ anhält. Ist der erste Notlaufpfad 28 funktionstüchtig, so ändert das Rückmeldesignal 17 des ersten Treibers 16 bereits zum Zeitpunkt t₂ seinen Zustand von logisch Null auf logisch Eins, im Fehlerfall jedoch erst zum Zeitpunkt t₃. Der Benutzer deaktiviert das Abblendlicht zum Zeitpunkt t₄. Somit ändert sich zum Zeitpunkt t₄ auch der Zustand des Rückmeldesignals 17 des ersten Treibers 16. Zum Zeitpunkt t5 bewirkt ein Abschalten des Standlichts (Standlicht-Steuersignal 26 wechselt vom Zustand logisch Eins auf logisch Null) ein Abschalten des Standlichts 22, erkennbar an einem Flankenwechsel des Rückmeldesignals 19 des zweiten Treibers 18.

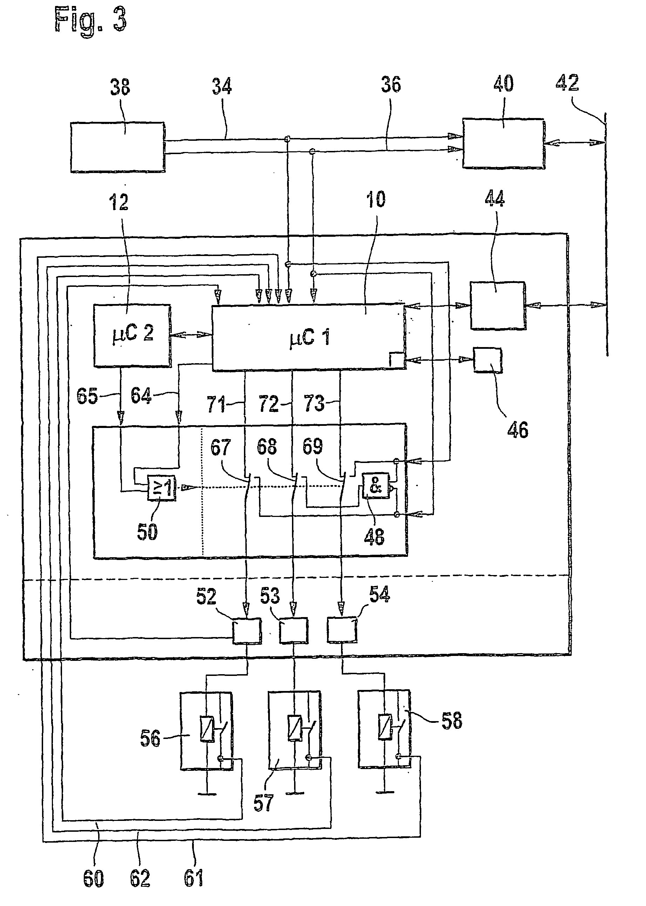

Bei dem Ausführungsbeispiel gemäß Figur 3 kann der Benutzer über einen Zündanlaßschalter 38 Zustände eines Zündungssteuersignals 34 (Klemme 15) und eines Startsteuersignals 36 (Klemme 50) beeinflussen. Diese Signale sind sowohl einem Lenkstock-Schalter-Modul 40 wie auch dem ersten Mikrocontroller 10 zugeführt. Der erste Mikrocontroller 10 tauscht Signale aus mit einem zweiten Mikrocontroller 12, der wiederum ein zweites Notlaufaktivierungssignal 65 als Eingangsgröße für ein Oder-Gatter 50 generiert. Dem Oder-Gatter 50 ist außerdem als weitere Eingangsgröße ein erstes Notlaufaktivierungssignal 64, von dem ersten Mikrocontroller 10 erzeugt, zugeführt. Das Ausgangssignal des Oder-Gatters 50 steuert erste, zweite, dritte Umschalter 67, 68, 69 an. In der gezeigten Schalterstellung der Umschalter 67 bis 69 gemäß Figur 3 ist kein Notlauf aktiviert, so daß die Umschalter 67 bis 69 die Ausgangssignale des ersten Mikrocontrollers 10, Startsignal 71, Startentlastungssignal 72, Zündungssignal 73, direkt an einen ersten, zweiten und dritten Relais-Treiber 52, 53, 54 weiterleiten. Der erste Relais-Treiber 52 aktiviert oder deaktiviert den Steuereingang eines ersten Relais 56, über das die Klemme 50 (Starter) aktivierbar ist. Der zweite Relais-Treiber 53 steuert das zweite Relais 57 an, welches die Startentlastung (Abschaltung nicht für den Startvorgang notwendiger Verbraucher) bewirkt (Klemme 75). Ist der Notlaufpfad nicht aktiviert, d.h. befindet sich der dritte Umschalter 69 im gezeigten Zustand, so gelangt das Zündungssignal 73, vom ersten Mikrocontroller 10 erzeugt, unmittelbar an den dritten Relais-Treiber 54, über welchen ein drittes Relais 58 zur Betätigung der Zündung aktiviert werden kann. Ein Startrückmeldesignal 60 erfaßt den Zustand des ersten Relais 56, das Zündungsrückmeldesignal 61 den des dritten Relais 58 sowie ein Startentlastungsrückmeldesignal 62 den des zweiten Relais 57, die jeweils als Eingangssignale dem ersten Mikrocontroller 10 zugeführt sind. Das Zündungssteuersignal 34 ist nun unter Umgehung des ersten Mikrocontrollers 10 dem dritten Umschalter 69 zugeführt. Wird der Notlauf aktiviert, so ändert der Umschalter 69 seinen in Figur 3 dargestellten Zustand und leitet nun das Zündungssteuersignal 34 unmittelbar unter Umgehung des Mikrocontrollers 10 weiter zur Ansteuerung des dritten Relais-Treibers 54. Wiederum unter Umgehung des ersten Mikrocontrollers 10 gelangt das Startsteuersignal 36 an den ersten Umschalter 67, der bei einer Aktivierung des Notlaufs durch das Ausgangssignal des Oder-Gatters 50 den ersten Relais-Treiber 52 unmittelbar mit dem Startsteuersignal 36 ansteuert. Das Zündungssteuersignal 34 und das negierte Startsteuersignal 36 werden durch ein Und-Gatter 48 verknüpft und bilden ein Startentlastungssignal, welches bei der Notlaufstellung des zweiten Umschalters 68 an den zweiten Relais-Treiber 53 zur Ansteuerung des zweiten Relais 57 gelangt. Der erste Mikrocontroller 10 tauscht Daten mit einem Watchdog 46 sowie über eine Busschnittstelle 44 mit einem Bussystem 42 aus. Auch zwischen dem Lenkstockschalter 40 und dem Bussystem 42 besteht eine Datenverbindung.

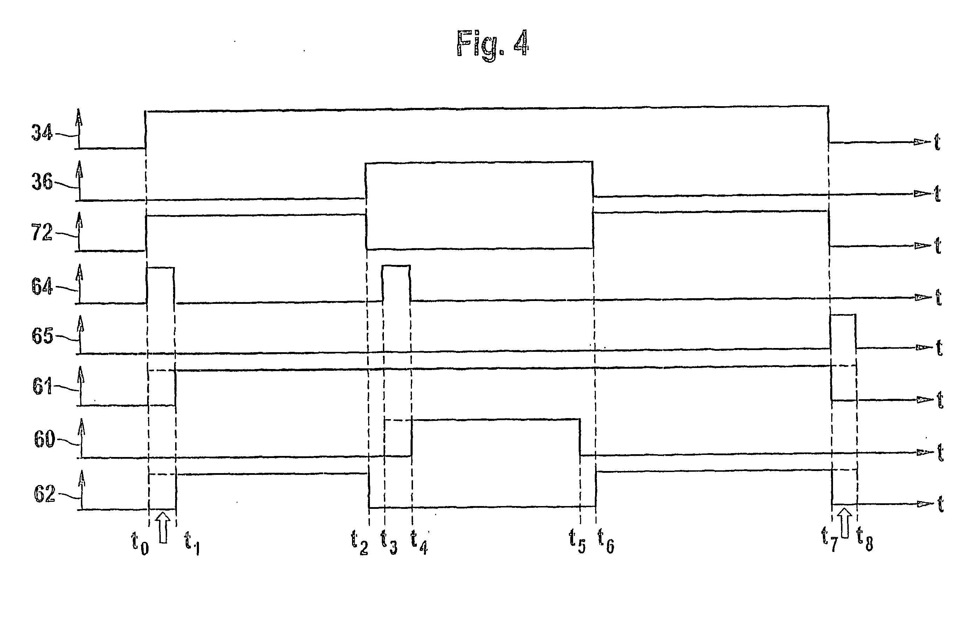

Figur 4 zeigt die bei dem Ausführungsbeispiel gemäß Figur 3 möglicherweise auftretenden Signalverläufe. Zum Zeitpunkt t₀ betätigt der Benutzer den Zündanlaßschalter 38 in die Position "Zündung ein", was sich an einem Signalwechsel des Zündungssteuersignals 34 von logisch Null auf logisch Eins bemerkbar macht. Zum Zeitpunkt t₂ möchte der Benutzer das Fahrzeug starten und bringt den Zündanlaßschalter 38 in die Position "Start", so daß das Startsteuersignal 36 vom Zustand logisch Null in den Zustand logisch Eins wechselt. Zum Zeitpunkt t₆ ändert sich dieser Zustand wieder, indem der Benutzer den Zündanlaßschalter 38 loslässt (Klemme 15 bleibt an). Das vom ersten Mikrocontroller 10 erzeugte Startentlastungssignal 72 ergibt sich aus der Und-Verknüpfung des Zündungssteuersignals 34 mit dem invertierten Startsteuersignal 36. Somit wechselt das Startentlastungssignal 72 zum Zeitpunkt t₀ vom Zustand logisch Null auf logisch Eins, um zum Zeitpunkt t₂ wieder den Zustand logisch Null (Abschalten der nicht benötigten Verbraucher zur Startentlastung) anzunehmen, bis zum Zeitpunkt t₆. Mit dem Abschalten des Zündungssteuersignals 34 zum Zeitpunkt t₇ wechselt auch das Startentlastungssignal 72 vom Zustand logisch Eins auf logisch Null. Mit Auftreten einer steigenden Flanke des Zündungssteuersignals 34 zum Zeitpunkt t₀ erzeugt der erste Mikrocontroller 10 das erste Notlaufaktivierungssignal 64 bis zum Zeitpunkt t₁. Zum Zeitpunkt t₃ aktiviert der erste Microcontroller 10 erneut das erste Notlaufaktivierungssignal 64. Um auch die Funktionsfähigkeit der Aktivierung des Notlaufpfads durch den zweiten Mikrocontroller 12 zu testen, wird zum Zeitpunkt t₇ mit Abschalten des Zündungssteuersignals 34 das zweite Notlaufaktivierungssignal 65 bis zum Zeitpunkt t₈ auf logisch Eins gesetzt. Das Startentlastungsrückmeldesignal 62 sollte bei ordnungsgemäßem Notlauf bereits zum Zeitpunkt t₀ den Zustand logisch Eins annehmen. Wechselt jedoch das Startentlastungsrückmeldesignal 62 erst zum Zeitpunkt t₁ den Zustand von logisch Null auf logisch Eins, so läßt dies auf einen defekten Notlaufpfad schließen. Das Startentlastungsrückmeldesignal 62 behält den Zustand logisch Eins vom Zeitpunkt t₆ bis zum Zeitpunkt t₇ bei korrekter Notlaufpfadansteuerung durch den zweiten Mikrocontroller 12 bei. Ist jedoch in der Notlaufpfadaktivierung durch den zweiten Mikrocontroller 12 ein Defekt aufgetreten, so wechselt das Startentlastungsrückmeldesignal 62 erst zum Zeitpunkt t8 vom Zustand logisch Eins auf logisch Null. Das Startrückmeldesignal 60 ändert bei funktionierender Notlaufpfadansteuerung durch den ersten Mikrocontroller 10 frühestens zum Zeitpunkt t₃ den Zustand von logisch Null auf logisch Eins. Bei einer defekten Notlaufpfadansteuerung durch den ersten Mikrocontroller 10 tritt die positive Flanke des Startrückmeldesignals 60 erst zum Zeitpunkt t₄ auf. Zum Zeitpunkt t₅ wechselt das Startrückmeldesignal 60 den Zustand von logisch Eins auf logisch Null. Das Zündungsrückmeldesignal 61 nimmt zum Zeitpunkt t₀ bei funktionierender Notlaufansteuerung durch den ersten Mikrocontroller 10 den Zustand logisch Eins ein, bei defekter Notlaufansteuerung jedoch erst zum Zeitpunkt t₁. Arbeitet die Notlaufaktivierung durch den zweiten Mikrocontroller 12 korrekt, so wechselt das Zündungsrückmeldesignal 61 bereits zum Zeitpunkt t₇ seinen Zustand von logisch Eins auf logisch Null, bei defektem Notlaufpfad jedoch erst zum Zeitpunkt t₈. Die Verzögerung zwischen Klemme 75/Klemme 50 (Zeitpunkte t₂, t₃; t₅, t₆) hat keinen Einfluss auf die Überprüfung der Notlaufpfade. Die Verzögerung kann durch software auch auf Null gesetzt werden.

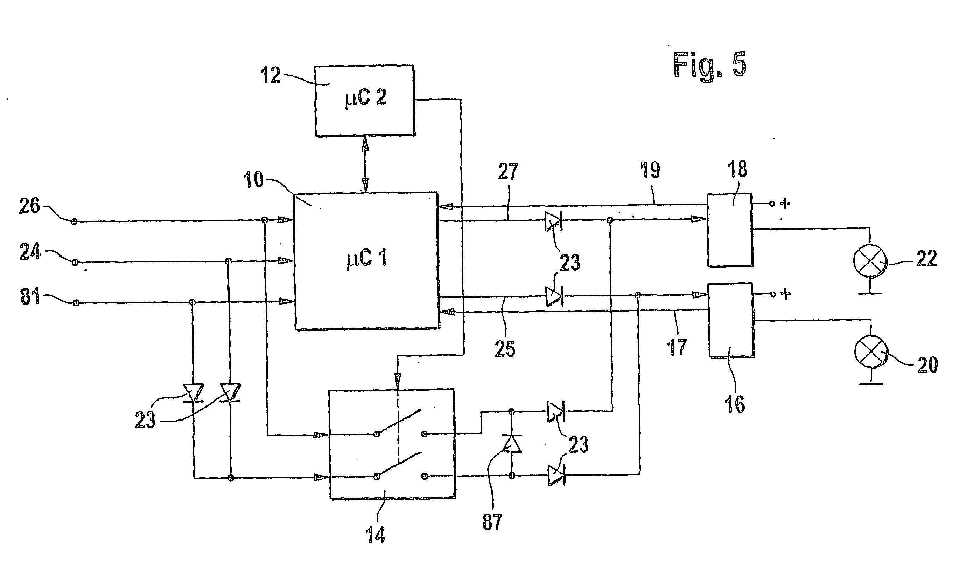

Bei dem dritten Ausführungsbeispiel gemäß Figur 5 wird in Ergänzung zu Figur 1 ein automatisches Fahrlichtsteuersignal 81 sowohl dem ersten Mikrocontroller 10 als auch unter Veroderung mit dem Ablendlichtsteuersignal 24 dem Schaltmittel 14 zugeführt. Zwischen den Ausgängen des Schaltmittels 14 befindet sich eine Notlaufdiode 87. Diese hat keinen Einfluss auf die Überprüfung der Notlaufpfade, bewirkt jedoch im Notlaufbetrieb bei einer Aktivierung des Abblendlichts oder der automatischen Fahrlichtfunktion das Einschalten des Standlichts 22.

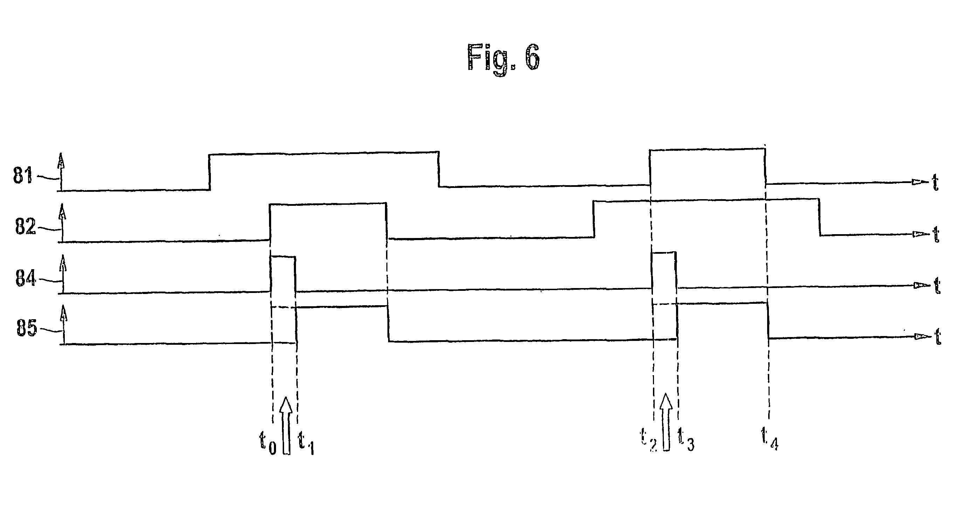

Nachfolgend wird der Signalverlauf gemäß Figur 6 beschrieben. Ein automatisches Fahrlichtsignal 81 ist ebenso wie ein Lichtsensorsignal 82 dem ersten Mikrocontroller 10 zugeführt. Dieser gibt ein Ausgangssignal 25 zur Ansteuerung eines Treibers 16 des Abblendlichts 20 aus. Bei der Notlaufpfad-Überprüfung erkennt der erste Mikrocontroller 10, dass der Lichtdrehschalter auf Stellung AFL steht und dass das Lichtsensorsignal aktiviert ist. Dann wird der Notlaufpfad über den zweiten Mikrocontroller 12 aktiviert, initiiert vom ersten Mikrocontroller 10. Im tatsächlichen Notlaufbetrieb, also nicht im Testfall, genügt es, wenn der Lichtdrehschalter auf Stellung AFL steht, um einen Lichtnotlauf zu aktivieren. Der erste Mikrocontroller 10 tauscht Daten aus mit dem zweiten Mikrocontroller 12, der die Ansteuerung des Umschalters zur Aktivierung des Notlaufbetriebs übernimmt. Das Notlaufaktivierungssignal 84 zur Überprüfung des Notlaufpfads wird dann aktiviert (Zustand logisch Eins), wenn das aus der logischen Und-Verknüpfung von Fahrlichtsignal 81 und Lichtsensorsignal 82 resultierende Signal eine positive Flanke aufweist. Dann erst wird das Abblendlicht eingestaltet. Bei ordnungsgemäßem Betrieb des Notlaufpfads bei einer Aktivierung durch den zweiten Mikrocontroller 12 wurde bereits zum Zeitpunkt t₀ das dem ersten Mikrocontroller 10 nur Fehlerauswertung ebenfalls zugeführte Abblendlicht-Rückmeldesignal 85 vom Zustand logisch Null auf logisch Eins wechseln. War die Ansteuerung des Notlaufpfads durch den zweiten Mikrocontroller 12 nicht erfolgreich (Notlaufpfad defekt), so erfolgt der Signalwechsel erst zum. Zeitpunkt t₁. Auch zum Zeitpunkt t₂ folgt eine erneute Aktivierung des Notlaufpfads bis zum Zeitpunkt t₃. Bei korrekt arbeitendem Notlaufpfad würde die Rückmeldung des Abblendlichts 85 bereits zum Zeitpunkt t₂ den Zustand wechseln, bei defektem Betrieb jedoch erst zum Zeitpunkt t₃.

Bei dem Ausführungsbeispiel gemäß Figur 1 übernimmt der erste Mikrocontroller 10 softwaregesteuert die Ansteuerung der Treiber 16, 18 in Abhängigkeit von dem Zustand des Abblendlichtsteuersignals 24 und des Standlicht-Steuersignals 26. Um im Fehlerfall des ersten Mikrocontrollers 10 die Ansteuerung der Treiber 16, 18 weiterhin zu gewährleisten, sind unter Umgehung des Mikrocontrollers 10 die Notlaufpfade 28, 30 vorgesehen, die die Steuersignale 24, 26 unmittelbar als Ansteuersignale für die Treiber 16, 18 über das Oder-Netzwerk 21 mit den Ausgangssignalen des ersten Mikrocontrollers 10 verknüpfen. Diese unmittelbare Ansteuerung unter Umgehung des Mikrocontrollers 10 erfolgt jedoch nur, wenn sich das Schaltmittel 14 im geschlossenen Zustand befindet. Die entsprechende Ansteuerung des Schaltmittels 14 wird von dem zweiten Mikrocontroller 12 mit Hilfe des Notlaufaktivierungssignals 32 übernommen. Der zweite Mikrocontroller 12 überwacht die Funktionsfähigkeit des ersten Mikrocontrollers 10 und steuert im Fehlerfall das Schaltmittel 14 im Sinne eines Schließens an, um die Notlaufpfade 28, 30 zu aktivieren. Damit ist im Normalbetrieb trotz eines Fehlers des ersten Mikrocontrollers 10 weiterhin der ordnungsgemäße Betrieb möglich.

Um nun die Funktionsfähigkeit der Notlaufpfade 28, 30 zu überprüfen, initiiert der erste Mikrocontroller 10 die Ansteuerung der Treiber 16, 18 für die Zeitspanne t₀ bis t₁ über die Notlaufpfade 28, 30 (über den zweiten Mikrocontroller 12 und das Notlaufaktivierungssignal 32). Nach dem Zeitpunkt t₁ jedoch erfolgt die Ansteuerung regulär durch Bereitstellung der Ansteuersignale 25, 27 unmittelbar über den ersten Mikrocontroller 10. Hierbei wird das Schaltmittel 14 im Sinne eines Öffnenes (Deaktivierung der Notlaufpfade 28, 30) angesteuert.

Anhand des Signalverlaufs gemäß Figur 2 wird die Funktionsweise der Notlaufüberprüfung näher beschrieben. Zum Zeitpunkt t0 betätigt der Benutzer das Standlicht, so daß das Standlicht-Steuersignal 26 vom Zustand logisch Null auf logisch Eins wechselt. Diese steigende Flanke triggert in dem ersten Mikrocontroller 10, der als Notlaufüberprüfungsmittel fungiert, die Aktivierung der Notlaufüberwachungsfunktion. Der erste Mikrocontroller 10 gibt zum Zeitpunkt t0 noch kein dem Standlicht-Steuersignal 26 entsprechendes Signal aus, sondern aktiviert über den zweiten Mikrocontroller 12 die Notlauffunktion. Daraufhin erzeugt der zweite Mikrocontroller 12 ein Notlaufaktivierungssignal 32, über das das Schaltmittel 14 in der Weise geschlossen wird, daß das Standlicht-Steuersignal 26 unter Umgehung des Mikrocontrollers 10 an den Eingang des zweiten Treibers 18 gelangt. Als Treiber 16, 18 sind beispielsweise Feldeffekttransistoren verwendet, die außerdem dem Ausgangsstrom proportionale Signale als Rückmeldesignale 17, 19 abgeben. Dieses Rückmeldesignal 19 unterzieht der erste Mikrocontroller 10 einer Analog-Digital-Wandlung und vergleicht den eingehenden Wert mit einer vorgebbaren Schwelle. Wird diese Schwelle überschritten, so schließt der Mikrocontroller 10 auf das Ansteuern des Standlichts 22. Der Mikrocontroller 10 wertet das Rückmeldesignal 19 innerhalb der Zeitspanne t₀ bis t₁ aus und vergleicht den gemeldeten Zustand des Standlichts 22 mit dem Soll-Zustand, wie er durch das eingehende Standlicht-Steuersignal 26 definiert wird. Ab dem Zeitpunkt t₀ soll das Standlicht 22 im Sinne einer Aktivierung angesteuert sein. Signalisiert das Rückmeldesignal 19 diesen Zustand, so schließt der Mikrocontroller 10 auf einen ordnungsgemäßen Betrieb des zweiten Notlaufpfads 30. Läßt das Rückmeldesignal 19 jedoch auf ein nicht aktiviertes Standlicht 22 schließen, so ergibt sich eine Abweichung des Soll-Zustands vom Ist-Zustand. Es wird auf einen Fehlerfall des zweiten Notlaufpfads 30 geschlossen. Der erste Mikrocontroller 10 nimmt einen entsprechenden Eintrag im Fehlerspeicher vor. Weiterhin könnte über ein nicht dargestelltes Datenbussystem dieser Fehler zur Anzeige gebracht werden, um den Benutzer darauf aufmerksam zu machen, die nächste Werkstatt anzusteuern. Der zweite Mikrocontroller 12 erzeugt jedoch nur ein Notlaufaktivierungssignal 32 für eine vorgebbare kurze Zeitspanne, d.h. vom Zeitpunkt t₀ bis zum Zeitpunkt t₁. Ab diesem, dem ersten Mikrocontroller 10 bekannten Zeitpunkt t₁ übernimmt nun dieser die Ansteuerung des zweiten Treibers 18, indem er den entsprechenden Zustand des Standlicht-Steuersignals 26 ausgibt. Jedoch ist der Notlaufpfad 30 nunmehr wieder unterbrochen, so daß das Standlicht-Steuersignal 26 nicht mehr unter Umgehung des Mikrocontrollers 10 unmittelbar den zweiten Treiber 18 ansteuert. Mit Auftreten einer steigenden Flanke des Abblendlicht-Steuersignals 24 zum Zeitpunkt t₂ wird nun die Funktionsfähigkeit des ersten Notlaufpfads 28 überprüft. Die Vorgehensweise entspricht sinngemäß der in Verbindung mit dem Standlicht-Notlaufpfad beschriebenen, unter Auswertung des Rückmeldesignals 17 des ersten Treibers 16.

Bei dem Ausführungsbeispiel gemäß Figur 3 können sowohl der erste Mikrocontroller 10 wie auch der zweite Mikrocontroller 12 die Aktivierung der Notlaufpfade übernehmen. Somit müssen auch diese beiden Aktivierungsmöglichkeiten überprüft werden. Da es sich beim Zündungssteuersignal 34 und dem Startsteuersignal 36 um besonders sicherheitsrelevante Signale handelt, ist weiterhin vorgesehen, eine Überprüfung der Notlaufpfade sowohl bei Eingangssignalen von logisch Null als auch von logisch Eins vorzunehmen. Bei Auftreten einer positiven Flanke des Zündungssteuersignals 34 aktiviert der erste Mikrocontroller 10 selbst die Notlauffunktion unmittelbar, indem das erste Notlaufaktivierungssignal 64 zum Zeitpunkt t₀ den Zustand logisch Eins annimmt und damit entsprechend auch das Ausgangssignal des Oder-Gatters 50. Dadurch werden die Umschalter 67, 68, 69 derart angesteuert, daß nunmehr unter Umgehung des ersten Mikrocontrollers 10 das Zündungssteuersignal 34 sowie das Startsteuersignal 36 unmittelbar an die Treiber 52, 54 gelangen. Um einen möglichen Fehlerzustand des Notlaufpfades zu detektieren, sind dem ersten Mikrocontroller 10 das Startrückmeldesignal 60, das Zündungsrückmeldesignal 61 sowie das Startentlastungsrückmeldesignal 62 jeweils über einen Analog-Digital-Eingang zurückgeführt. Zwischen den Zeitpunkten t₀ und t₁ wird nun das Zündungsrückmeldesignal 61 ausgewertet, ob dieses Ist-Signal mit dem vom Zündungssteuersignal 34 vorgegebenen Soll-Zustand übereinstimmt. Ist dies der Fall, so schließt der Mikrocontroller 10 auf einen hinsichtlich des Zündungssignals korrekt arbeitenden Notlaufpfad. Bei einer Abweichung von Sollzustand und Istzustand (Fehlerfall des Notlaufpfades) nimmt der erste Mikrocontroller 10 einen Eintrag in den Fehlerspeicher vor. Zusätzlich wird über die Schnittstelle 44 eine Fehlermeldung auf das Bussystem 42 abgesetzt, um so zur Anzeige gebracht zu werden. Um nun auch ein korrektes Arbeiten des Notlaufpfades bei der Ansteuerung durch den zweiten Mikrocontroller 12 zu überprüfen, aktiviert der erste Mikrocontroller 10 bei einer fallender Flanke des Zündungssteuersignals 34 zum Zeitpunkt t₇ über den zweiten Mikrocontroller 12 erneut die Notlauffunktion bis zum Zeitpunkt t₈. Wird das Zündungsrelais 58 trotz deaktivierter Ansteuerung aktiviert, so schließt der Mikrocontroller 10 auf einen Fehler des Notlaufpfads. Das Notlaufmittel wird in diesem Fall über den zweiten Mikrocontroller 12 geschaltet.

Zum Zeitpunkt t₂ besitzt das Startsteuersignal 36 eine steigende Flanke. Zwischen den Zeitpunkten t₂ und t₃ erfolgt eine Verzögerung der Klemme 75 / Klemme 50-Signale 62, 60. Die Klemme 50/75- bzw. Klemme 75/50-Verzögerungen haben keinen Einfluss auf die Überprüfung der Notlauf-Pfade. Diese Verzögerungen dienen lediglich dazu, um eine sehr kurze (z.B. 10 ms) Verzögerungszeit zwischen Klemme 50 und Klemme 75 zu erzeugen. Mit dieser Verzögerungszeit soll sichergestellt werden, dass Klemme 50 erst eingeschaltet wird, wenn Klemme 75 schon abgeschaltet hat. Diese Zeit kann durch Software auf Null gesetzt werden. Es erfolgt keine Überprüfung der Notlauf-Pfade während dieser Zeit. Die Tests der Notlauf-Pfade auf logisch Null erfolgen parallel: z.B. wird zwischen t₀ und t₁ Klemme 15 auf logisch Eins, Klemme 50 auf logisch Null und Klemme 75 auf logisch Eins geprüft. Zum Zeitpunkt t₃ aktiviert der erste Mikrocontroller 10 nun die Notlauffunktion, um unter Umgehung des ersten Mikrocontrollers 10 das Startsteuersignal 36 unmittelbar an den ersten Relais-Treiber 52 zu leiten. Stimmt der durch das Startrückmeldesignal 60 abgebildete Ist-Zustand mit dem durch das Startsteuersignal 36 vorgesehenen Soll-Signal überein, erkennt der erste Mikrocontroller 10 auf einen ordnungsgemäßen Betrieb des Notlaufpfads. Bei Abweichungen wird auf einen Fehler geschlossen.

In analoger Vorgehensweise wird auch der Notlaufpfad für die Startentlastung überprüft.

Eine entsprechende Auswertung ist auch auf den Signalverlauf gemäß Figur 6 sinngemäß zu übertragen. Auch die Notlaufpfade weiterer sicherheitsrelevanter Funktionen können auf die beschriebene Art und Weise überprüft werden. An der prinzipiellen Vorgehensweise ändert sich nichts.

Die beschriebene Vorrichtung eignet sich insbesondere für die Anwendung in einem Kraftfahrzeug.

## Patentansprüche

1. Vorrichtung zur sicheren Signalerzeugung in einem Kraftfahrzeug, mit zumindest einem Steuermittel (10), dem zumindest ein Steuersignal (24, 26, 34, 36) zugeführt ist, wobei das Steuermittel (10) in Abhängigkeit von dem Steuersignal (24, 26, 34, 36) zumindest ein Ansteuersignal (25, 27) erzeugt zur Ansteuerung zumindest eines Schaltmittels oder Treibers (16, 18, 52, 53, 54), mit Notlaufmitteln (14, 28, 30, 67, 68, 69), die in einem Notbetrieb das Ansteuersignal (25, 27) in Abhängigkeit von zumindest dem Steuersignal (24, 26, 34, 36) anstelle des Steuermittels (10) erzeugen, und mit Überprüfungsmitteln (10, 12), die anhand einer gezielten Ansteuerung der Notlaufmittel (14, 28, 30, 67, 63, 69) deren Funktionsfähigkeit überprüfen, **dadurch gekennzeichnet, dass** erst nach einer definierten Zeitspanne ab Flankenwechsel des Steuersignals (24, 26, 34, 36), in welches Zeitspanne die Funktionsfähigkeit des Notlaufmittel überprüft wird, eine Aktivierung oder Deaktivierung des Notlaufmittels (14, 28, 30, 67, 68, 69) für eine vorgebbare Zeitspanne erfolgt.

2. Vorrichtung nach Anspruch 1, **dadurch gekennzeichnet, dass** Überprüfungsmittel (10) die Ansteuerung der Notlaufmittel (14, 28, 30, 67, 68, 69) für eine vorgebbare Zeitspanne veranlassen.

3. Vorrichtung nach einem der vorhergenden Ansprüche, **dadurch gekennzeichnet, dass** anhand zumindest eines Rückmeldesignals (17, 19, 60, 61, 62) ein Fehler der Notlaufmittel (14, 28, 30, 67, 68, 69) derart erkannt ist, dass ein anhand des Steuersignals (24, 26, 34, 36) vorgegebener Sollzustand mit einem anhand des Rückmeldesignals (17, 19, 60, 61, 62) abgeleiteten Istzustand durch die Überprüfungsmittel (10, 12) verglichen ist.

4. Vorrichtung nach einem der vorhergehenden Ansprüche, **dadurch gekennzeichnet, dass** bei einem Flankenwechsel des Steuersignals (24, 26, 34, 36) die Notlaufmittel (14, 28, 30, 67, 68, 69) aktiviert oder deaktiviert werden.

5. Vorrichtung nach einem der vorhergehenden Ansprüche, **dadurch gekennzeichnet, dass** ein weiteres Steuermittel (12) vorgesehen ist, welches in Abhängigkeit von dem ersten Steuermittel (10) die Notlaufmittel (14, 28, 30, 67, 68, 69) aktiviert oder deaktiviert.

6. Vorrichtung nach einem der vorhergehenden Ansprüche, **dadurch gekennzeichnet, dass** die Notlaufmittel (14, 28, 30, 67, 68, 69) das Steuersignal (24, 26, 34, 36) unter Umgehung des Steuermittels (10) als Ansteuersignal (25, 27) im Notlauffall weiterleiten.

7. Vorrichtung nach einem der vorhergehenden Ansprüche, **dadurch gekennzeichnet, dass** die Notlaufmittel (14, 28, 30, 67, 68, 69) zumindest einen Umschalter (14, 67, 68, 69) umfassen zur Weiterleitung entweder des Ausgangssignals des Steuermittels (10) oder des Steuersignals (24, 26, 34, 36).

8. Vorrichtung nach einem der vorhergehenden Ansprüche, **dadurch gekennzeichnet, dass** als Rückmeldesignal (17, 19, 60, 61, 62) ein Maß für den von dem Schaltmittel (16, 18, 56, 57, 58) beeinflussten Strom verwendet ist.

## Claims

1. Device for reliable signal generation in a motor vehicle, having at least one control means (10) to which at least one control signal (24, 26, 34, 36) is fed, the control means (10) generating at least one actuation signal (25, 27) as a function of the control signal (24, 26, 34, 36) in order to actuate at least one switching means or driver (16, 18, 52, 53, 54), having emergency operating means (14, 28, 30, 67, 68, 69) which generate the actuation signal (25, 27) in an emergency operating mode as a function of at least the control signal (24, 26, 34, 36) instead of the control means (10), and having checking means (10, 12) which check the operational capability of the emergency operating means (14, 28, 30, 67, 68, 69) by means of targeted actuation, **characterized in that** the emergency operating means (14, 28, 30, 67, 68, 69) is activated or deactivated for a predefinable time period only after a defined time period during which the operational capability of the emergency operating means is checked, said time period starting from the edge change of the control signal (24, 26, 34, 36).

2. Device according to Claim 1, **characterized in that** checking means (10) bring about the actuation of the emergency operating means (14, 28, 30, 67, 68, 69) for a predefinable time period.

3. Device according to one of the preceding claims, **characterized in that** a fault of the emergency operating means (14, 28, 30, 67, 68, 69) is detected by means of at least one feedback signal (17, 19, 60, 61, 62) in such a way that a setpoint state which is predefined by means of the control signal (24, 26, 34, 36) is compared by the checking means (10, 12) with an actual state which is derived by means of the feedback signal (17, 19, 60, 61, 62).

4. Device according to one of the preceding claims, **characterized in that** when there is an edge change of the control signal (24, 26, 34, 36) the emergency operating means (14, 28, 30, 67, 68, 69) are activated or deactivated.

5. Device according to one of the preceding claims, **characterized in that** a further control means (12) is provided which activates or deactivates the emergency operating means (14, 28, 30, 67, 68, 69) as a function of the first control means (10).

6. Device according to one of the preceding claims, **characterized in that** in a case of emergency operation the emergency operating means (14, 28, 30, 67, 68, 69) pass on the control signal (24, 26, 34, 36) as an actuation signal (25, 27) by bypassing the control signal (10).

7. Device according to one of the preceding claims, **characterized in that** the emergency operating means (14, 28, 30, 67, 68, 69) comprise at least one changeover switch (14, 67, 68, 69) for passing on either the output signal of the control means (10) or the control signal (24, 26, 34, 36).

8. Device according to one of the preceding claims, **characterized in that** a measure of the current which is influenced by the switching means (16, 18, 56, 57, 58) is used as a feedback signal (17, 19, 60, 61, 62).

## Revendications

1. Dispositif de production sécurisée de signaux dans un véhicule à moteur, comprenant au moins un moyen de commande (10), vers lequel est acheminé au moins un signal de commande (24, 26, 34, 36), le moyen de commande (10) produisant au moins un signal de pilotage (25, 27) en fonction du signal de commande (24, 26, 34, 36) pour le pilotage d'au moins un moyen de commutation ou pilote (16, 18, 52, 53, 54), des moyens de secours (14, 28, 30, 67, 68, 69) qui, en mode d'urgence, produisent le signal de pilotage (25, 27) en fonction au moins du signal de commande (24, 26, 34, 36) au lieu du moyen de commande (10), et comprenant des moyens de vérification (10, 12) qui, à l'aide d'un pilotage ciblé des moyens de secours (14, 28, 30, 67, 68, 69) vérifient leur bon fonctionnement,
**caractérisé en ce qu'**
une activation ou une désactivation du moyen de secours (14, 28, 30, 67, 68, 69) pour un temps prédéfinissable, a lieu uniquement à l'issue d'un temps défini à partir du changement de flanc du signal de commande (24, 26, 34, 36), temps dans lequel le bon fonctionnement des moyens de secours est vérifié.

2. Dispositif selon la revendication 1,
**caractérisé en ce que**
des moyens de vérification (10) initient le pilotage des moyens de secours (14, 28, 30, 67, 68, 69) pour un laps de temps prédéfinissable.

3. Dispositif selon l'une quelconque des revendications précédentes,
**caractérisé en ce qu'**
à l'aide d'au moins un signal en retour (17, 19, 60, 61, 62) on détecte un défaut des moyens de secours (14, 28, 30, 67, 68, 69) **en ce que** les moyens de vérification (10, 12) comparent un état de consigne, prédéfini à l'aide du signal de commande (24, 26, 34, 36), à un état réel dérivé à l'aide du signal en retour (17, 19, 60, 61, 62).

4. Dispositif selon l'une quelconque des revendications précédentes,
**caractérisé en ce que**
lors d'un changement de flanc du signal de commande (24, 26, 34, 36), les moyens de secours (14, 28, 30, 67, 68, 69) sont activés ou désactivés.

5. Dispositif selon l'une quelconque des revendications précédentes,
**caractérisé en ce qu'**
un autre moyen de commande (12) active ou désactive les moyens de secours (14, 28, 30, 67, 68, 69) en fonction du premier moyen de commande (10).

6. Dispositif selon l'une quelconque des revendications précédentes,
**caractérisé en ce que**
les moyens de secours (14, 28, 30, 67, 68, 69) transmettent le signal de commande (24, 26, 34, 36) en contournant le moyen de commande (10) en tant que signal de pilotage (25, 27) en cas d'urgence.

7. Dispositif selon l'une quelconque des revendications précédentes,
**caractérisé en ce que**
les moyens de secours (14, 28, 30, 67, 68, 69) comprennent au moins un inverseur (14, 67, 68, 69) pour transmettre soit le signal de sortie du moyen de commande (10) soit le signal de commande (24, 26, 34, 36).

8. Dispositif selon l'une quelconque des revendications précédentes,
**caractérisé en ce que**
comme signal en retour (17, 19, 60, 61, 62) on utilise une mesure pour le courant influencé par le moyen de commutation (16, 18, 56, 57, 58).
